# EUROPEAN PATENT APPLICATION

(11) **EP 2 621 213 A2**
(43) Date of publication of application: **31.07.2013**
(21) Application number: 13152664.2
(22) Date of filing: 25.01.2013
(51) Int. Cl.: H04W 28/24

(54) **Communication apparatus, method for controlling communication apparatus, and program**

(30) Priority: 25.01.2012 JP 2012013036
(71) Applicant: CANON KABUSHIKI KAISHA, Ohta-ku Tokyo 146-8501 (JP)
(72) Inventor: Goto, Fumihide, Ohta-ku, Tokyo (JP)
(74) Representative: Northway, Daniel Robert

(57) **Abstract**

A communication apparatus includes means for operating as a providing apparatus for providing a communication parameter to another communication apparatus, means for operating as a reception apparatus for receiving a communication parameter provided from another communication apparatus, determination means for determining a role to perform based on predetermined processing for determining whether the communication apparatus operates as the providing apparatus or the reception apparatus by communication with another communication apparatus, and execution means for executing the predetermined processing again in a case where communication for sharing the communication parameter with another communication apparatus is not started after the determination means determines that the communication apparatus operates as either the providing apparatus or the reception apparatus.

## Description

### BACKGROUND OF THE INVENTION

### Field of the Invention

The present invention relates to a communication apparatus, a method for controlling the communication apparatus, and a program.

### Description of the Related Art

Conventionally, participation of a communication apparatus having a wireless local area network (LAN) function in a network (an infrastructure network) provided by an access point (hereinbelow abbreviated to an "AP") requires a user to set up a wireless connection and security at the communication apparatus. In this process, the user needs to input various settings at a communication terminal. Since these settings and inputs required for wireless communication are complicated, the setup is a troublesome work for inexperienced users.

To solve this issue, "Wi-Fi Protected Setup Specification Version 1.0h" by Wi-Fi Alliance (non-patent literature 1) is released as a wireless LAN technique of the industry standard for simplifying processes for setting up a wireless connection and security to allow a communication apparatus to participate in an infrastructure network. The technique discussed in the non-patent literature 1 is mounted on various products as Wi-Fi Protected Setup (WPS).

WPS is a technique in which an AP serves as a parameter providing apparatus (hereinbelow referred to as a "registrar"), and a communication apparatus acquires parameters required for a wireless LAN connection from the AP as a parameter reception apparatus (hereinbelow referred to as an "enrollee"). The WPS technique includes two methods, one is a push button method, according to which, buttons are pressed at the both apparatuses, and the other is a Personal Identification Number (PIN) method, according to which, predetermined PIN codes are set at the both apparatuses and communication parameters are set between the apparatuses having matching the PIN codes. Further, the WPS technique defines that, in a case where the WPS is carried out based on the push button method, error processing is performed as a session overlap when there are a plurality of registrars or a plurality of enrollees.

On the other hand, in recent years, with the widespread use of electronic apparatuses having a wireless communication function, there has been a growing demand for enabling direct communication (ad-hoc communication) between two or more apparatuses without an intervention of an AP. Even such an AP-free network (an ad-hoc network) requires settings and inputs of communication parameters required in wireless communication between apparatuses. In a case where a wireless connection and security are automatically set up like the above-described WPS technique in an ad-hoc network, processing for determining between apparatuses which apparatus operates as a registrar and which apparatus operates as an enrollee is required, since apparatuses are in an equal relationship.

United States Patent Application Publication No. 2008/0037444 discusses a method for controlling whether a communication apparatus operates as a registrar or an enrollee. United States Patent Application Publication No. 2008/0037444 discusses a configuration in which a communication apparatus determines whether to operate as a registrar or an enrollee as a role in execution of parameter setting processing based on a user's operation. Further, in the configuration discussed in United States Patent Application Publication No. 2008/0037444, when a communication apparatus operating as an enrollee cannot detect another apparatus operating as a registrar for a predetermined time period, the communication apparatus switches its role to a registrar.

Further, United States Patent Application Publication No.2012/0063327 discusses a configuration inwhich a communication apparatus capable of operating as a registrar and an enrollee determines a role to operate as based on a negotiation with another communication apparatus.

Consideration is given to a process to be performed in a case where, in automatic parameter setting processing in an ad-hoc mode, a plurality of apparatuses start automatic setting processing at similar timing, and one of the communication apparatuses detects a plurality of registrars or enrollees. For example, according the WPS, the role assignment is fixed in such a manner that an AP operates as a registrar and a terminal apparatus operates as an enrollee. Therefore, when an apparatus detects a plurality of apparatuses operating as a different role from its own role, the apparatus cannot determine which one the apparatus it should start processing with, and therefore cannot help but terminate the processing as a session overlap. However, it is desirable in terms of user's operability to, instead of causing all of the plurality of apparatuses that start the automatic setting processing to terminate the processing as an error, allow at least two apparatuses to start the processing, if a communication partner can exert both the registrar function and the enrollee function.

### SUMMARY OF THE INVENTION

According to a first aspect of the present invention, there is provided a communication apparatus as specified in claims 1 to 9. According to a second aspect of the present invention, there is provided a method as specified in claim 10. According to a third aspect of the present invention, there is provided a program as specified in claim 11.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.

Fig. 1 is a block diagram illustrating a configuration of a communication apparatus according to exemplary embodiments of the present invention.

Fig. 2 is a block diagram illustrating a functional configuration of the communication apparatus according to the exemplary embodiments of the present invention.

Fig. 3 illustrates an example of a network configuration.

Fig. 4 is a sequence diagram illustrating a sequence in a case where a plurality of communication apparatuses cannot perform automatic setting processing.

Fig. 5 is a sequence diagram of communication apparatuses according to a first exemplary embodiment.

Fig. 6 is a flowchart illustrating an operation performed by the communication apparatus according to the first exemplary embodiment.

Fig. 7 is a sequence diagram of communication apparatuses according to a second exemplary embodiment.

Fig. 8 is a packet sequence diagram illustrating communication parameter exchange processing.

Fig. 9 is a sequence diagram illustrating a sequence of retransmitting an Extensible Authentication Protocol over LAN (EAPOL)-START packet.

Fig. 10 is a sequence diagram illustrating a sequence of retransmitting an Extensible Authentication Protocol (EAP)-Request (Req.)/Identity packet.

### DESCRIPTION OF THE EMBODIMENTS

Various exemplary embodiments, features, and aspects of the invention will be described in detail below with reference to the drawings.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

Exemplary embodiments that will be described below are directed to allowing at least two arbitrary apparatuses to perform communication parameter setting processing, even when three or more apparatuses start processing for sharing communication parameters among them.

Hereinbelow, a communication apparatus according to a first exemplary embodiment will be described in detail with reference to the drawings. The first exemplary embodiment will be described below based on an example using a wireless LAN system compliant with Institute of Electrical and Electronics Engineers (IEEE) 802.11 Series. However, the communication method is not limited to the wireless LAN compliant with IEEE 802.11.

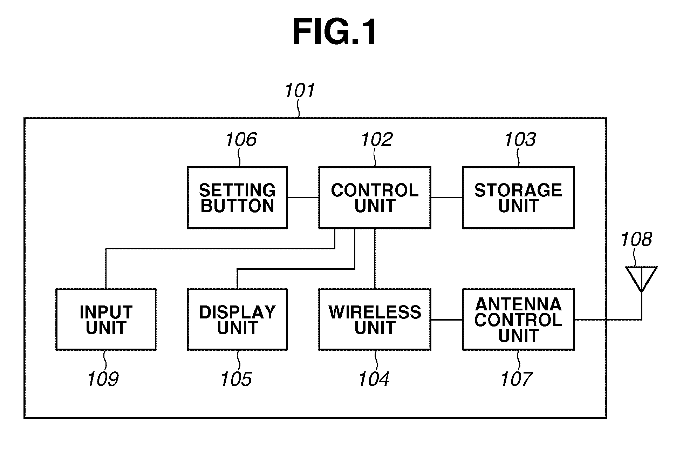

A hardware configuration in the present exemplary embodiment will be described. Fig. 1 is a block diagram illustrating an example of a configuration of each apparatus according to the present exemplary embodiment, which will be described below. A communication apparatus 101 includes the following units. A control unit 102 controls the entire apparatus by executing a control program stored in a storage unit 103. The control unit 102 also controls settings of communication parameters between the communication apparatus 101 and another apparatus. The storage unit 103 stores the control program to be executed by the control unit 102 and various pieces of information such as communication parameters. The control unit 102 executes the control program stored in the storage unit 103, so that various operations that will be described below are realized. A wireless unit 104 enables the wireless LAN communication compliant with IEEE 802.11 Series. A display unit 105 provides various kinds of display, and has a function of outputting visually recognizable information such as a liquid crystal display (LCD) and a light emitting diode (LED), or a function of outputting sound such as a speaker.

A setting button 106 provides a trigger for starting the communication parameter setting processing. When the setting button 106 is operated, processing for automatically setting communication parameters is started. The setting button 106 may be constituted by hardware or may be realized by an arbitrary user interface (UI) such as a selection of an icon output by the display unit 105. The control unit 102 performs processing described below, upon detection of a user's operation of the setting button 106. The communication apparatus 101 further includes an antenna control unit 107 and an antenna 108. An input unit 109 allows a user to perform various inputs.

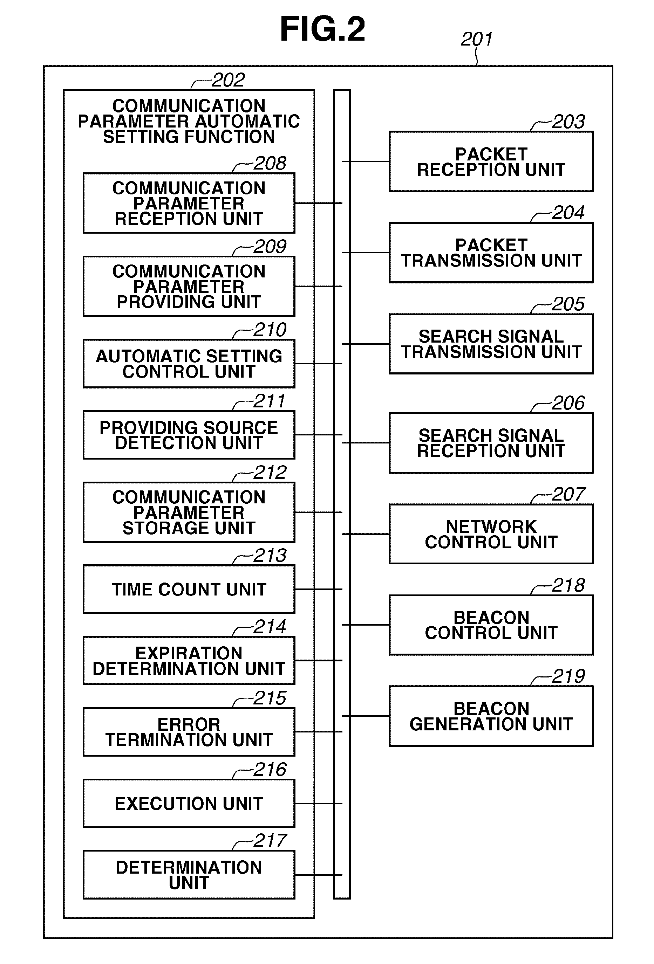

Fig. 2 is a block diagram illustrating a functional configuration realized by controlling the respective hardware devices of the communication apparatus 101 according to the program. A block 201 represents the entire apparatus. The apparatus 201 includes the following units. According to the present exemplary embodiment, an automatic setting function unit 202 for communication parameters automatically sets communication parameters required for performing the wireless LAN communication, such as a service set identifier (SSID) as a network identifier, an encryption method, an encryption key, an authentication method, and an authentication key. Hereinbelow, the communication parameter automatic setting will be abbreviated to "automatic setting". A packet reception unit 203 receives packets relating to various communications. A beacon (a notification signal) is received by the packet reception unit 203. A packet transmission unit 204 transmits packets relating to various communications. A beacon is transmitted by the packet transmission unit 204. Various pieces of information of an apparatus that is a transmission source are added to a beacon.

A search signal transmission unit 205 controls transmission of an apparatus search signal such as a probe request. The term "probe request" is also used to refer to a network search signal for searching for a desired network. A probe request is transmitted by the search signal transmission unit 205. In addition, a probe response which is a response signal to a received probe request is also transmitted by the search signal transmission unit 205. According to the present exemplary embodiment, in a case where a user operates the setting button 106 to start the automatic setting processing, a beacon, a probe request, and a probe response are transmitted with information indicating that the automatic setting is in progress (the automatic setting is currently performed) attached thereto. According to the present exemplary embodiment, the attached information will be referred to as an "information element (IE)".

A search signal reception unit 206 controls reception of an apparatus search signal such as a probe request from another apparatus. A probe request is received by the search signal reception unit 206. A probe response is also received by the search signal reception unit 206. Various pieces of information of an apparatus that is a transmission source are added to an apparatus search signal and a response signal to the apparatus search signal. A network control unit 207 controls a network connection. For example, processing for connecting to a wireless LAN ad-hoc network is performed by the network control unit 207.

The automatic setting function unit 202 further includes a communication parameter reception unit 208, a communication parameter providing unit 209, an automatic setting control unit 210, a providing source detection unit 211, and a communication parameter storage unit 212. The automatic setting function unit 202 further includes a time count unit 213, an expiration determination unit 214, an error termination unit 215, an execution unit 216, and a determination unit 217.

The communication parameter reception unit 208 receives (accepts) communication parameters from an apparatus at the other end of the communication (i.e., a partner apparatus). The communication parameter providing unit 209 provides communication parameters to a partner apparatus. The automatic setting control unit 210 controls various protocols in the automatic setting. Further, the automatic setting control unit 210 cancels the automatic setting processing when an elapsed time from a start of the automatic setting exceeds a predetermined limit time.

The providing source detection unit 211 detects an apparatus that provides communication parameters (a registrar) when the communication apparatus 201 itself operates as an apparatus that receives a provision of the communication parameters (an enrollee). The providing source detection unit 211 detects an apparatus that provides communication parameters based on transmission of a search signal and a response thereto by the search signal transmission unit 205 and the search signal reception unit 206. Further, the providing source detection unit 211 can detect an apparatus that provides communication parameters based on reception of a beacon by the packet reception unit 203. When receiving a provision of the communication parameters, the enrollee apparatus transmits a request for providing the communication parameters to the detected apparatus that provides the communication parameters, and receives the provided communication parameters. In the following description, an apparatus that provides communication parameters (a registrar) will be referred to as a "providing apparatus", and an apparatus that receives a provision of communication parameters (an enrollee) will be referred to as a "reception apparatus".

The communication parameter storage unit 212 stores communication parameters provided from a providing apparatus or communication parameters to be provided to a reception apparatus. The communication parameter storage unit 212 corresponds to the storage unit 103. According to the present exemplary embodiment, when the communication apparatus receives a provision of communication parameters from another apparatus, the communication parameters are stored in the storage unit 103 as parameters that have been already set. Further, when the communication apparatus provides communication parameters to another apparatus, the provided communication parameters are stored in the communication parameter storage unit 212 as parameters that have been already set. The already set parameters stored in the storage unit 103 may be discarded upon completion of communication in a network constructed using the already set parameters. Alternatively, the already set parameters stored in the storage unit 103 may be discarded, for example, when a predetermined time period has elapsed from the storage of the parameters in the storage unit 103, or when the communication apparatus is powered off.

The time count unit 213 is a timer for measuring a time. The expiration determination unit 214 determines whether a predetermined time period has elapsed based on the time count unit 213. The error termination unit 215 terminates the automatic setting function upon detection of a predetermined condition, and notifies a user of the error termination. The execution unit 216 controls processing for determining whether the communication apparatus operates as a providing apparatus (a providing function) or as a reception apparatus (a reception function). The determination unit 217 determines a function to be performed based on the processing for determining which function the communication apparatus performs, the providing function or the reception function, which is controlled by the execution unit 216.

A beacon control unit 218 controls a timing of transmitting a beacon (a notification signal). A beacon generation unit 219 generates a beacon. The generated beacon is transmitted to a network by the packet transmission unit 204. All of the functional blocks have a correlation among them by means of software or hardware. Further, the above-described functional blocks are a mere example. A plurality of functional blocks may constitute one functional block, or some of the functional blocks may be further divided into blocks that perform a plurality of functions.

An operation of the communication apparatus with the above-described configuration according to the present exemplary embodiment will be described. First, communication parameter automatic setting processing according to the present exemplary embodiment will be described. The communication apparatus according to the present exemplary embodiment starts the automatic setting processing upon detection of an operation of the setting button 106. First, the communication apparatus performs processing for determining a role (a function) to perform. The communication apparatus determines the role (a function) that the apparatus itself performs, based on communication with another communication apparatus.

As discussed in United States Patent Application Publication No. 2008/0037444, in the processing for determining a role, the communication apparatus determines a temporal role of the apparatus itself, and determines an actual role based on whether the communication apparatus is detected by or detects another communication apparatus operating as a role different from the role that the communication apparatus temporarily determines for itself. Further, the communication apparatus changes its temporal role when the communication apparatus cannot be detected by or detect another communication apparatus operating as a role different from the role that the communication apparatus temporarily determines for itself.

As discussed in United States Patent Application Publication No. 2012/0063327, the communication apparatus may be configured to transmit and receive a message for determining a role to or from another communication apparatus, and determine a higher-priority apparatus as a management apparatus by comparing a priority included in the message with its own priority.

After the communication apparatus determines a role which the apparatus itself operates as by the role determination processing, the communication apparatus starts processing for sharing parameters with the other communication apparatus (communication parameter exchange processing). The automatic setting processing is terminated as an error if a time corresponding to a time-out error (a first predetermined time period) elapses before the communication parameter exchange processing is completed.

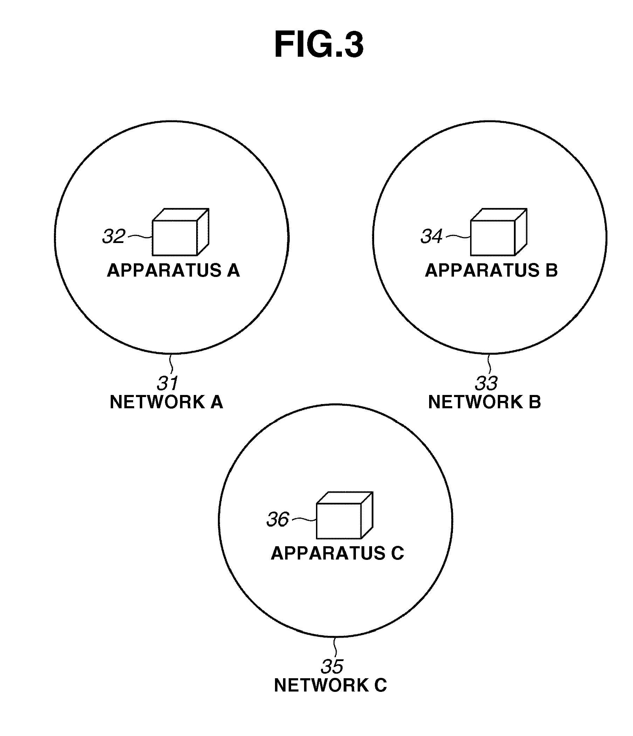

Next, an operation of the communication apparatus according to the present exemplary embodiment will be described based on an example of a system configuration illustrated in Fig. 3. A system illustrated in Fig. 3 includes three communication apparatuses, i.e., a communication apparatus A 32 (hereinbelow referred to as "the apparatus A"), a communication apparatus B 34 (hereinbelow referred to as "the apparatus B"), and a communication apparatus C 36 (hereinbelow referred to as "the apparatus C). The apparatuses A, B, and C form an ad-hoc network A 31 (hereinbelow referred to as "the network A"), an ad-hoc network B 33 (hereinbelow referred to as "the network B"), and an ad-hoc network C 35 (hereinbelow referred to as "the network C"), respectively. The communication apparatuses A, B, and C include the above-described configuration illustrated in Figs. 1 and 2. According to the present exemplary embodiment, the communication parameter automatic setting is performed between the apparatuses that respectively form independent networks, so that parameters are shared between them, and data communication can be performed between them.

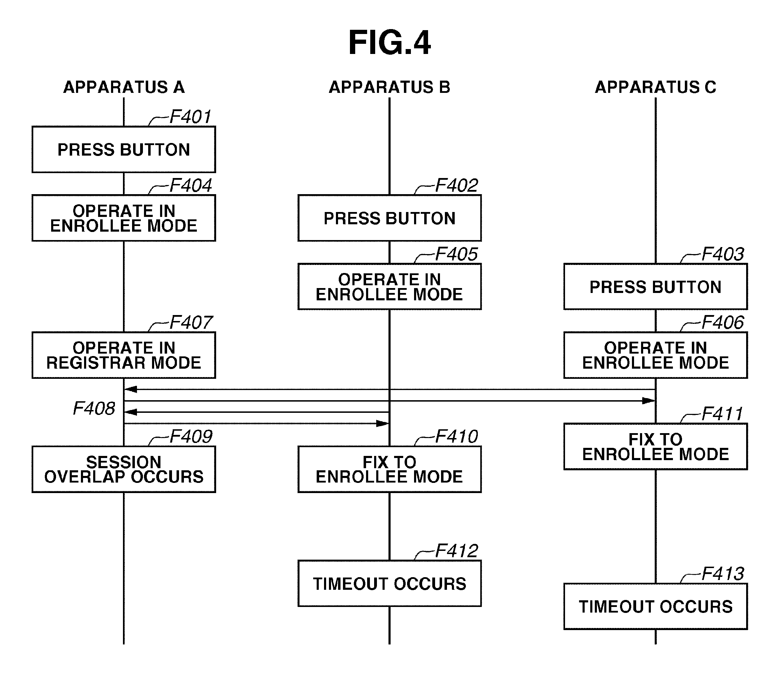

Next, an issue in a case where a plurality of communication apparatuses starts the communication parameter automatic setting processing at similar timing according to the present exemplary embodiment will be described. Fig. 4 illustrates an example of a processing sequence when the setting buttons 106 are pressed at the apparatuses A, B, and C at similar timing, and the automatic setting processing is performed among the respective apparatuses A, B, and C.

Referring to Fig. 4, in steps F401, F402, and F403, the apparatuses A, B, and C detect pressing of the setting buttons 106, respectively. In steps F404, F405, and F406, the execution units 216 of the apparatuses A, B, and C first control the apparatuses A, B, and C to operate as reception apparatuses (enrollees) as temporal roles, and start scanning for detecting another apparatus that operates as a providing apparatus (a registrar).

In step F407, the execution unit 216 of the apparatus A changes an operation mode of its own to a providing apparatus, since the apparatus A cannot detect another apparatus operating as a providing apparatus for a predetermined time period. The execution unit 216 of the apparatus A controls the search signal reception unit 206 to determine whether the search signal reception unit 206 has received a search signal (a broadcast or multicast wireless signal for searing for an apparatus such as a probe request as described above) from another communication apparatus operating as a reception apparatus.

In step F408, in response to a search signal from each of the apparatuses B and C operating as reception apparatuses at the timing when the apparatus A operates as the providing apparatus, the packet transmission unit 204 transmits a response signal including information indicating that the apparatus A is operating as the providing apparatus to the respective apparatuses. In steps F410 and F411, the determination units 217 of the apparatuses B and C detect another communication apparatus operating as a providing apparatus in response to the response signals to the search signals, which are transmitted from the providing apparatus (the apparatus A), and determine that the apparatuses C and B operate as reception apparatuses.

On the other hand, the apparatus A detects that the search signals from the respective apparatuses B and C, which the apparatus A has received while operating as the providing apparatus, include information indicating that the apparatuses B and C operate as the reception apparatuses. In step F409, the error termination unit 215 of the apparatus A terminates the automatic setting processing as an error (a session overlap), since the apparatus A detects that there is a plurality of reception apparatuses when operating as the providing apparatus. In a case where the apparatus A terminates the processing as an error, the apparatus A does not perform the subsequent communication parameter exchange processing.

However, since the apparatuses B and C are determined that they operate as the reception apparatuses, the apparatuses B and C wait for a start of the communication parameter exchange processing from the apparatus A which is the providing apparatus. However, the apparatus A has already stopped the communication parameter exchange processing due to the error termination. Then, in steps F412 and F413, also in the apparatuses B and C, the automatic setting control units 210 thereof detect that the above-described first predetermined time period has elapsed without the communication parameter exchange processing started, and then terminate the automatic setting processing as a time-out error. In the case illustrated in Fig. 4, all of the communication apparatuses A, B, and C end up error termination.

As described above with reference to Fig. 4, all communication apparatuses may become incommunicable with each other (the parameter automatic setting processing cannot be completed) depending on the timing when the plurality of apparatuses start the communication parameter automatic setting. For example, when the apparatuses B and C want to communicate with each other, a user needs to instruct the apparatuses B and C to start the automatic setting processing again after a time-out error occurs. Thus, the user is forced to perform a cumbersome operation and to waste time, and usability is damaged.

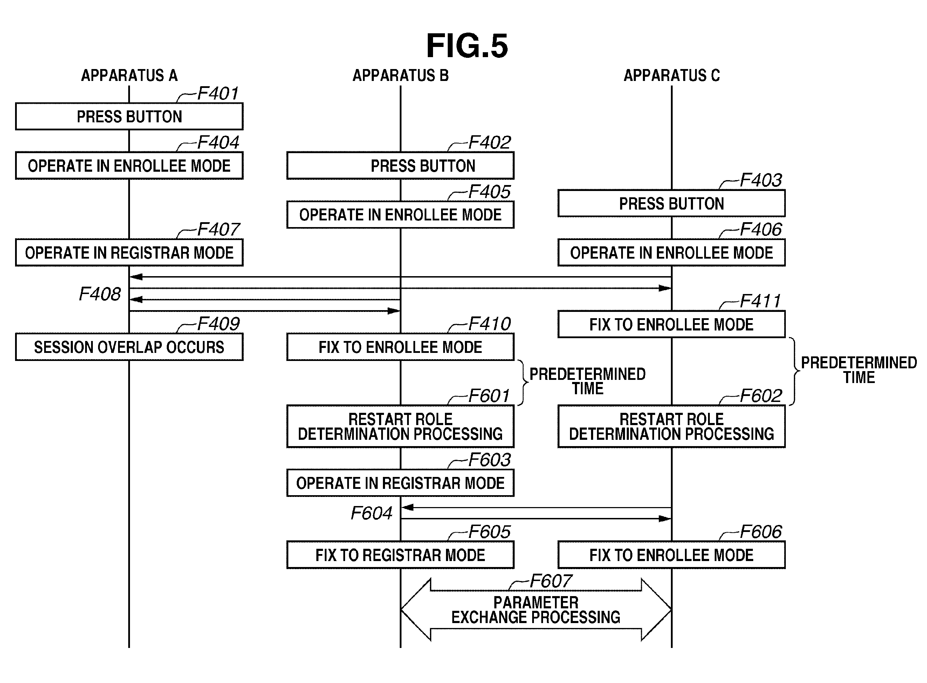

Therefore, according to the present exemplary embodiment, control is performed in the following manner. The role determination processing is automatically executed again in a case where the communication parameter exchange processing is not launched after the communication apparatus determines a role (a providing apparatus or a reception apparatus) relating to transmission and reception of communication parameters. Accordingly, if a plurality of apparatuses start the automatic setting processing at similar timing, eventually, at least two communication apparatuses perform the communication parameter exchange processing, and become communicable. Fig. 5 is a sequence diagram illustrating a sequence including the above-described control. In Fig. 5, similar processing to those illustrated in Fig. 4 are identified by the same step numbers.

Fig. 5 illustrates an example of a processing sequence when the setting buttons 106 are pressed at the apparatuses A, B, and C at similar timing, and the automatic setting processing is performed among them, in a similar manner to Fig. 4.

Referring to Fig. 5, in steps F401, F402, and F403, the apparatuses A, B, and C detect pressing of the setting buttons 106, respectively. In steps F404, F405, and F406, the execution units 216 of the apparatuses A, B, and C first control the apparatus A, B, and C to operate as reception apparatuses (enrollees) as temporal roles, and start scanning for detecting another apparatus that operates as a providing apparatus (a registrar).

In step F407, the execution unit 216 of the apparatus A changes its own operation mode to a providing apparatus, since the apparatus A cannot detect another apparatus operating as a providing apparatus for a predetermined time period. The execution unit 216 of the apparatus A controls the search signal reception unit 206 to determine whether the search signal reception unit 206 has received a search signal (a broadcast or multicast wireless signal for searing for an apparatus such as a probe request as described above) from another communication apparatus operating as a reception apparatus.

In step F408, in response to a search signal from each of the apparatuses B and C operating as reception apparatuses at the timing when the apparatus A operates as the providing apparatus, the packet transmission unit 204 transmits a response signal including information indicating that the apparatus A is operating as the providing apparatus to the respective apparatuses. In steps F410 and F411, the determination units 217 of the apparatuses B and C detect another communication apparatus operating as a providing apparatus in response to the response signals to the search signals, which are transmitted from the providing apparatus (the apparatus A), and determine that the apparatuses C and B operate as reception apparatuses.

On the other hand, the apparatus A detects that the search signals from the respective apparatuses B and C, which the apparatus A has received while operating as the providing apparatus, include information indicating that the apparatuses B and C operate as the reception apparatuses. In step F409, the error termination unit 215 of the apparatus A terminates the automatic setting processing as an error (a session overlap), since the apparatus A detects that there is a plurality of reception apparatuses when operating as the providing apparatus. In a case where the apparatus A terminates the processing as an error, the apparatus A does not perform the subsequent communication parameter exchange processing.

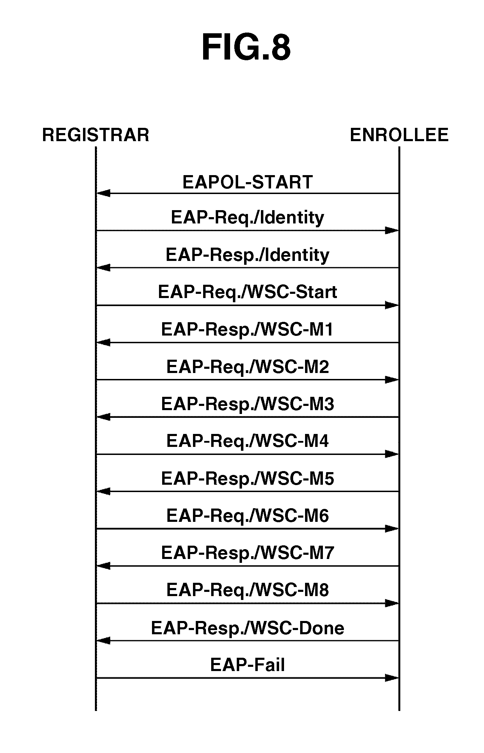

However, since the apparatuses B and C have determined that they operate as the reception apparatuses, the apparatuses B and C wait for a start of the communication parameter exchange processing from the apparatus A which is the providing apparatus. The apparatuses B and C wait for a start of the parameter exchange processing according to the role determination for a predetermined time period (a second predetermined time period). Fig. 8 illustrates a packet sequence of the parameter exchange processing between a providing apparatus (i.e., a registrar) and a reception apparatus (i.e., an enrollee).

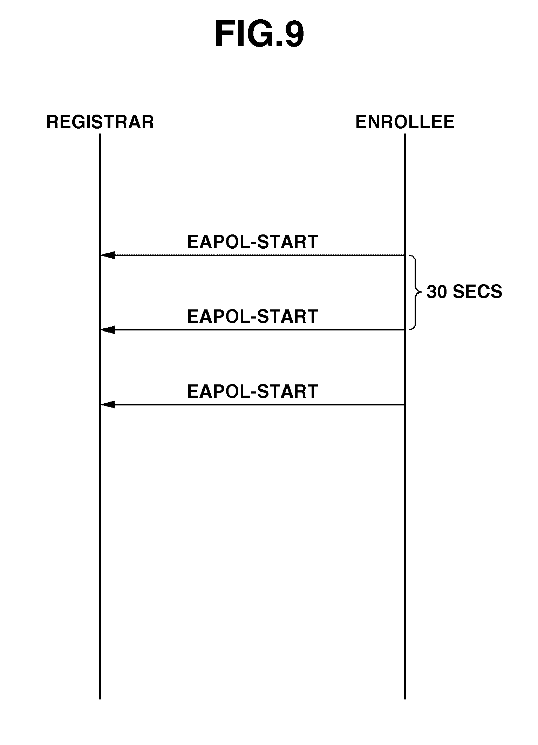

Waiting for a start of the communication parameter exchange processing from a reception apparatus means waiting for reception of an EAPOL-START packet illustrated in Fig. 8. As illustrated in Fig. 9, the EAPOL-START packet is retransmitted at an interval of 30 seconds. Therefore, it is desirable that a providing apparatus is configured to wait for a start of the communication parameter exchange processing for 30 seconds or longer in consideration of a failure in transmission of the EAPOL-START packet.

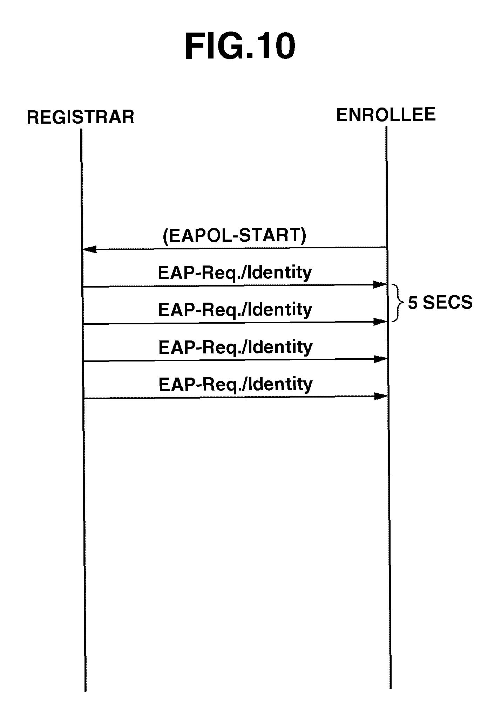

On the other hand, waiting for a start of the communication parameter exchange processing from a providing apparatus means waiting for reception of a EAP-Req./Identity packet as illustrated in Fig. 10. Retransmission of the EAP-Req. /Identity packet is managed by the providing apparatus side, and the EAP-Req./Identity packet is retransmitted at an interval of 5 seconds according to the specification. Therefore, it is desirable that a reception apparatus is configured to wait a start of the communication parameter exchange processing for 5 seconds or longer in consideration of a failure in transmission of the EAP-Req./Identity packet. In other words, the system can be configured in such a manner that the communication apparatuses have different timer times for waiting a start of the parameter exchange processing according to the determined roles. In the communication parameter exchange processing, the EAPOL-START packet illustrated in Fig. 10 may be omitted.

Returning to Fig. 5, in steps F601 and F602, the execution units 216 of the apparatuses B and C restart the role determination processing when time-out is detected by the timers for waiting for a start of the communication parameter exchange processing. The apparatuses B and C restart the role determination processing, and restart scanning processing for detecting another apparatus operating as a providing apparatus.

In step F603, the apparatus B switches the operation mode of its own to a providing apparatus, since the apparatus B cannot detect another apparatus operating as a providing apparatus for a predetermined time period. In step F604, the packet transmission unit 204 of the apparatus B transmits a response signal including information indicating that the apparatus B is operating as a providing apparatus in response to a search signal from the apparatus C operating as a reception apparatus at the timing when the apparatus B operates as the providing apparatus.

Then, in steps F605 and F606, the apparatuses B and C determine their roles again in such a manner that the apparatus B operates as the providing apparatus and the apparatus C operates as the reception apparatus. In step F607, the parameter exchange processing is performed between the apparatus B and the apparatus C.

As described above, in a case where the communication parameter exchange processing is not started after the role is determined, the role determination processing is automatically performed again. Therefore, if three or more communication apparatuses perform the parameter automatic setting processing at similar timing, it is possible to complete the parameter automatic setting processing (perform the parameter exchange processing) normally, between at least two communication apparatuses.

Fig. 5 illustrates the example in which the communication apparatus restarts the role determination processing, in a case where the communication parameter exchange processing is not started after the communication apparatus determines to operate as a reception apparatus. However, the system may be configured in such a manner that a communication apparatus restarts the role determination processing, in a case where the communication parameter exchange processing is not started after the communication apparatus determines to operate as a providing apparatus.

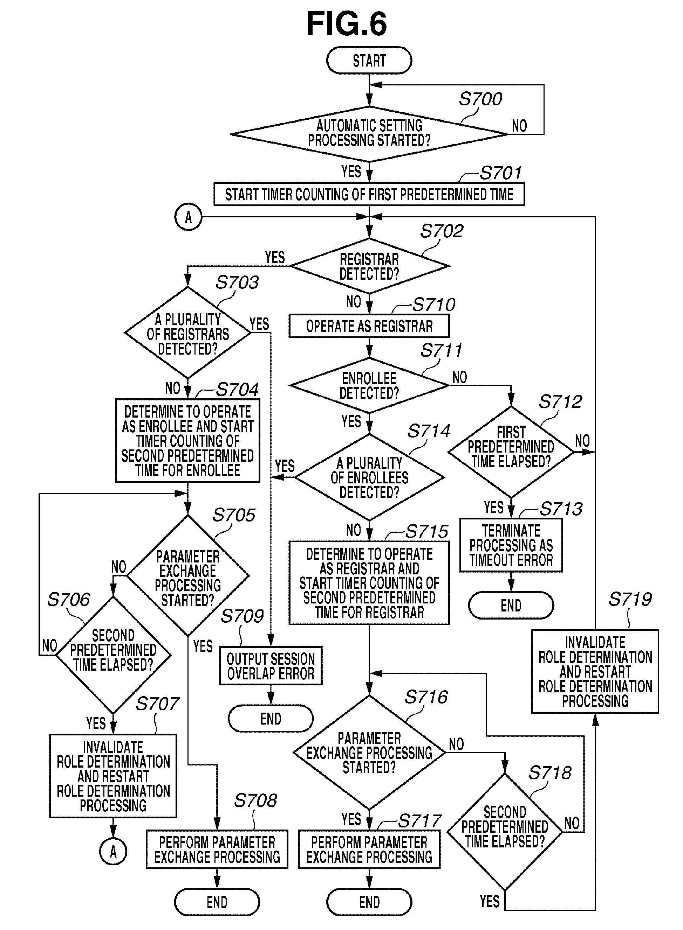

Next, Fig. 6 is a flowchart illustrating an operation flow of each communication apparatus for realizing the sequence diagram illustrated in Fig. 5. In step S700, the automatic setting control unit 210 of the communication apparatus determines to start the automatic setting processing based on detection of pressing of the setting button 106.

In step S701, when the automatic setting control unit 210 detects a start of the automatic setting processing based on the pressing of the setting button 106, the time count unit 213 of the communication apparatus starts timer counting of the first predetermined time period which is a time period from a start of the automatic setting processing to an error termination due to time-out. Then, the execution unit 216 starts the role determination processing (the processing for determining the function).

First, the execution unit 216 controls the communication apparatus to operate as a reception apparatus (an enrollee). In step S702, the providing source detection unit 211 starts scanning processing for detecting another communication apparatus operating as a providing apparatus.

If the providing source detection unit 211 detects a providing apparatus (YES in step S702), in step S703, the execution unit 216 determines whether the providing source detection unit 211 has detected a plurality of providing apparatuses. If a plurality of providing apparatuses is detected (YES in step S703), in step S709, the error termination unit 215 outputs a session overlap error, and terminates the processing.

If only one providing apparatus is detected (NO in step S703), in step S704, the determination unit 217 determines that its own communication apparatus operates as a reception apparatus, and the time count unit 213 starts timer counting of the second predetermined time period for an enrollee (in the present exemplary embodiment, the second predetermined time period is 5 seconds as described above).

In step S705, the automatic setting control unit 210 causes the packet transmission unit 204 to transmit a EAPOL-START packet to the other communication apparatus. Then, the automatic setting control unit 210 determines whether the communication parameter exchange processing is started based on whether an EAP-Req./Identity packet is received from the other communication apparatus.

If an EAP-Req./Identity packet is received from the other communication apparatus (YES in step S705), in step S708, the communication parameter reception unit 208 stores subsequently provided communication parameters into the communication parameter storage unit 212 to share them with the other communication apparatus. If an EAP-Req./Identity packet is not received from the other communication apparatus (NO in step S705), in step S706, the expiration determination unit 214 determines whether the second predetermined time period has elapsed.

If the second predetermined time period has elapsed (YES in step S706), in step S707, the automatic setting control unit 210 invalidates the determination to operate as the reception apparatus. Then, the execution unit 216 returns the processing to step S702 to restart the role determination processing. In step S702, the providing source detection unit 211 starts scanning processing for detecting another communication apparatus operating as a providing apparatus.

Next, a case in which no providing apparatus is detected for the predetermined time period in step S702 (NO in step S702) will be described. In this case, in step S710, the execution unit 216 switches the role of the communication apparatus itself to operates as a providing apparatus.

In step S711, the search signal reception unit 206 determines whether the search signal reception unit 206 has detected another apparatus operating as a reception apparatus according to reception of a search signal from the other communication apparatus operating as the reception apparatus.

As a result of determination, if the search signal reception unit 206 cannot detect another communication apparatus operating as a reception apparatus (NO in step S711), in step S712, the expiration determination unit 214 determines whether the first predetermined time period has elapsed. If the first predetermined time period has not elapsed yet (NO in step S712), the processing returns to S702 again. In step S702, the execution unit 216 sets the apparatus itself as the reception apparatus again.

If the first predetermined time period has elapsed (YES in step S712), in step S713, the error termination unit 215 terminates the automatic setting processing as a time-out error. The communication apparatus may be configured in such a manner that a time-out error of the automatic setting processing is determined at not only the timing after the processing in step S711 but also any timing, or determination of a time-out error is performed as interruption processing after the first predetermined time period has elapsed.

If the search signal reception unit 206 has detected a reception apparatus in step S711 (YES in step S711), in step S714, the execution unit 216 determines whether the search signal reception unit 206 has detected a plurality of reception apparatuses. If the search signal reception unit 206 has detected a plurality of reception apparatuses (YES in step S714), in step S709, the error termination unit 215 outputs a session overlap error, and terminates the processing in a similar manner to the flow when a plurality of providing apparatuses is detected.

If the search signal reception unit 206 has detected only one reception apparatus in step S714 (NO in step S714), in step S715, the determination unit 217 determines that its own communication apparatus operates as a providing apparatus, and the time count unit 213 starts timer counting of the second predetermined time period for a registrar (30 seconds as described above in the present exemplary embodiment).

Then, in step S716, the automatic setting control unit 210 determines whether the communication parameter exchange processing is started based on whether the packet reception unit 203 has received an EAPOL-START packet from the other communication apparatus. The automatic setting control unit 210 may determine whether the communication parameter exchange processing is started based on whether the communication apparatus itself first has transmitted an EAP-Req./Identity packet, and then has received an EAP-Response (Resp)/Wi-Fi Simple Configuration (WSC)-Start packet from the other communication apparatus. The EAP-Req./Identity is retransmitted at an interval of 5 seconds according to the specification. Therefore, in this case, the second predetermined time period for a registrar can be set to 5 seconds.

The processing to be performed in a case where an EAPOL-START packet is received from the other communication apparatus, and the parameter exchange processing is started. If it is determined that the parameter exchange processing is started (YES in step S716), in step S717, the communication parameter providing unit 209 performs the parameter exchange processing to share the communication parameters stored in the communication parameter storage unit 212 with the other communication apparatus operating as a reception apparatus.

If an EAPOL-START packet is not received from the other communication apparatus (NO in step S716), in step S718, the expiration determination unit 214 determines whether the second predetermined time period has elapsed.

If the second predetermined time period has elapsed (YES in step S718), in step S719, the automatic setting control unit 210 invalidates the determination to operate as a providing apparatus, and the execution unit 216 restarts the role determination processing. Therefore, the processing return to step S702 again, in which the execution unit 216 switches the operation mode of its own communication apparatus to a reception apparatus. The communication apparatus may be configured in such a manner that the processing returns from step S719 to step S710, instead of returning from step S719 to step S702. As described above, in a case where the parameter exchange processing is not started within the predetermined time period, the processing is repeated from the role determination for determining a providing apparatus or a reception apparatus, and the sequence chart illustrated in Fig. 5 can be realized.

As described above, according to the present exemplary embodiment, even when three or more communication apparatuses try the communication parameter automatic setting at similar timing, the communication parameter exchange processing can be performed between at least arbitrary two communication apparatuses, and data communication can be realized. Further, the present exemplary embodiment can reduce the possibility of an error in the automatic setting processing, and eliminate user's necessity of restarting the automatic setting processing, thereby improving user's convenience. Furthermore, the present exemplary embodiment allows the communication apparatus to repeat the role determination processing without waiting for a time-out error of the automatic setting processing, thus the efficiency of the automatic setting processing can be improved.

According to the present exemplary embodiment, the timer for waiting for a start of the communication parameter exchange processing is determined based on retransmission timing of a packet used in the communication parameter exchange processing, and the timer time for a registrar and the timer time for an enrollee are set to 30 seconds and 5 seconds, respectively. However, it is desirable that the timer is set to a time longer than the retransmission time in consideration of a time taken for, for example, packet generation processing and a transmission delay. Therefore, for example, the communication apparatus may be configured in such a manner that the timer time for a registrar and the timer time for an enrollee are set to 32 seconds and 7 seconds, respectively, in consideration of, for example, packet generation processing and a transmission delay in addition to the retransmission time. Setting the timer in consideration of, for example, packet generation processing and a transmission delay in this way can reduce the possibility of cancellation of the parameter exchange processing that would otherwise be started.

The first exemplary embodiment is described based on an example that restarts the role determination processing in a case where the parameter exchange processing is not started after the role determination. However, according to the first exemplary embodiment, for example, although the apparatus B wants to perform the automatic setting processing with the apparatus A, the apparatus B may be placed in such a situation that the automatic setting processing is performed between the apparatus B and the apparatus C which is unknown to the apparatus B. In other words, a security issue arises since the communication apparatus is set to be communicable with an apparatus that is not a desired communication partner.

Therefore, a second exemplary embodiment will be described as the following example. In a case where the parameter exchange processing is not started after the role is determined, the communication apparatus notifies a user of error information, and asks the user about whether the user wants to continue the automatic setting processing. Further, the communication apparatus asks the user about whether the user wants to connect to a partner apparatus with which the communication apparatus has performed the communication parameter exchange processing in the continued automatic setting processing.

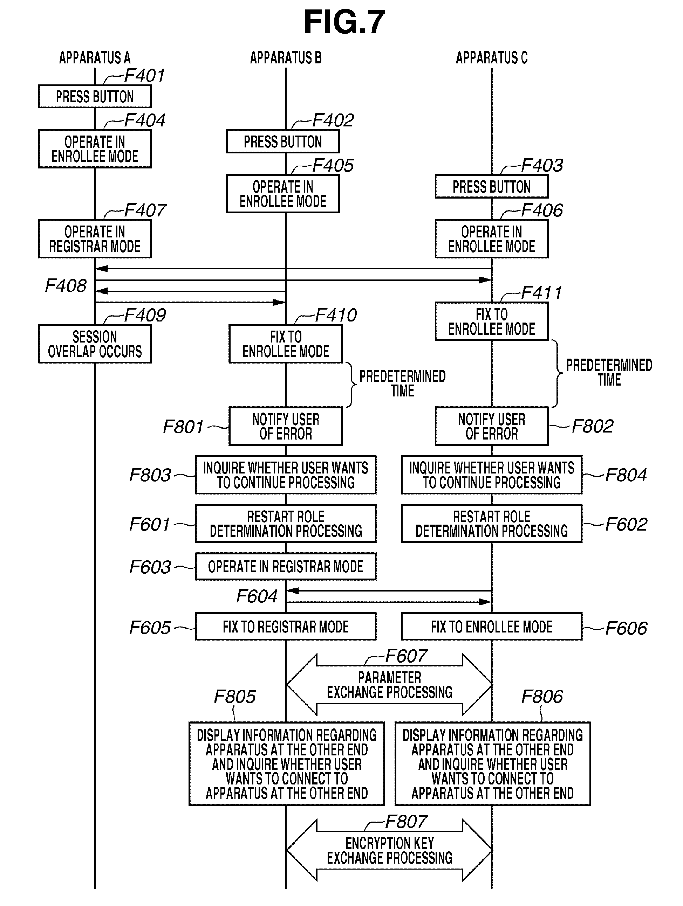

Each communication apparatus according to the second exemplary embodiment includes a similar configuration to that in the first exemplary embodiment. A difference of the second exemplary embodiment from the first exemplary embodiment will be described below. Fig. 7 illustrates an example of a sequence according to the second exemplary embodiment when the apparatuses A, B, and C start the communication parameter automatic setting at similar timing.

A difference from the sequence illustrated in Fig. 5 will be described now. In steps F410 and F411, the apparatuses B and C determine to operate as reception apparatuses. Then, in steps F801 and F802, if the parameter exchange processing is not started for the predetermined time period, the apparatuses B and C each display an error notification for notifying a user that the parameter exchange processing is not started.

Then, in steps F803 and F804, the apparatuses B and C each inquire whether the user wants to continue the processing. In this inquiry, the apparatuses B and C also notify the user that there is a risk in terms of security if the user chooses to continue the processing. If the apparatuses B and C are instructed to continue the processing by the user, the apparatuses B and C respectively perform steps F601 and F602 and the subsequent steps illustrated Fig. 5. If the apparatuses B and C are instructed to cancel the processing by the user, the apparatuses B and C terminate the processing.

As described above, according to the second exemplary embodiment, a user is notified of the error and asked whether to continue the processing. Therefore, the second exemplary embodiment can reduce such a possibility that the communication apparatus may become communicable to another apparatus that is not a desired apparatus without the security risk being recognized by the user. Further, the user can recognize that three or more communication apparatuses have performed the automatic communication parameter setting with similar timing. Furthermore, the communication apparatus can quickly retry the processing according to a user's instruction.

Then, after the parameter exchange processing is completed between the apparatuses B and C, in steps F805 and F806, the apparatuses B and C respectively notify the user via the display unit 105 of information regarding the partner communication apparatus with which the respective apparatuses have performed the parameter exchange processing, and inquire the user whether the user wants to connect to this partner apparatus.

If the apparatuses B and C are instructed by the user to connect to the partner apparatus with which the respective apparatuses B and C have performed the parameter exchange processing, in step F807, the apparatuses B and C perform encryption key exchange processing (Wi-Fi Protected Access (WPA) key exchange processing). On the other hand, if the apparatuses B and C are not permitted to connect to the partner apparatus, the apparatuses B and C stop the connection processing at that time and terminate the processing. The communication apparatus may be configured to transmit a message for notifying the partner apparatus that the connection is cancelled (the processing is terminated as an error) if the connection is not permitted. If the communication apparatus receives a message notifying that the connection is cancelled (the processing is terminated as an error), the communication apparatus also immediately terminates its own connection processing.

As described above, ensuring a user's confirmation is sought after the automatic communication parameter setting is performed, and before the connection processing is performed, can reduce a possibility that the network may be shared between unexpected communication apparatuses, and a security risk can be reduced.

The communication apparatus according to the above-described exemplary embodiments includes means for operating as a providing apparatus for providing a communication parameter to another communication apparatus, means for operating as a reception apparatus for receiving a communication parameter provided from another communication apparatus, first determination means for determining a function to perform based on predetermined processing for determining whether the communication apparatus operates as the providing apparatus or the reception apparatus by communication with first another communication apparatus, and second determination means for determining a function to perform based on predetermined processing for determining whether the communication apparatus operates as the providing apparatus or the reception apparatus by communication with second another communication apparatus, in a case where communication for sharing the communication parameter with the first another communication apparatus is not started after the first determination means determines that the communication apparatus operates as either the providing apparatus or the reception apparatus by the communication with the first another communication apparatus.

Aspects of the present invention can also be realized by a computer of a system or apparatus (or devices such as a CPU or an MPU) that reads out and executes a program recorded on a memory device to perform the functions of the above-described embodiments, and by a method, the steps of which are performed by a computer of a system or apparatus by, for example, reading out and executing a program recorded on a memory device to perform the functions of the above-described embodiments. For this purpose, the program is provided to the computer for example via a network or from a recording medium of various types serving as the memory device (e.g., computer-readable medium).

While the present invention has been described with reference to exemplary embodiments, it is to be understood that the invention is not limited to the disclosed exemplary embodiments. Each feature disclosed in the description, and (where appropriate) the claims and drawings may be provided independently or in any appropriate combination.

## Claims

1. A communication apparatus comprising:
means adapted to operate as a providing apparatus for providing a communication parameter to another communication apparatus;
means adapted to operate as a reception apparatus for receiving a communication parameter provided from another communication apparatus;
execution means adapted to determine a role to perform based on predetermined processing for determining whether the communication apparatus operates as the providing apparatus or the reception apparatus by communication with another communication apparatus; and
adapted to execute the predetermined processing again in a case where communication for sharing the communication parameter with another communication apparatus is not started within a predetermined time after a determination that the communication apparatus operates as either the providing apparatus or the reception apparatus.

2. The communication apparatus according to claim 1, further comprising termination means for, in a case where processing for sharing the communication parameter is not completed within another predetermined time, terminating the processing for sharing the communication parameter as an error,
wherein the execution means executes the predetermined processing again before the termination means terminates the communication for sharing the communication parameter with another communication apparatus as an error.

3. The communication apparatus according to claim 1, wherein the execution means executes the predetermined processing again in a case where the communication apparatus does not receive a predetermined packet from another communication apparatus within the predetermined time after the execution means determines that the communication apparatus operates either as the providing apparatus or the reception apparatus.

4. The communication apparatus according to claim 1, wherein the communication apparatus starts communication for sharing the communication parameter in a case where the communication apparatus receives a predetermined packet from another communication apparatus within the predetermined time after the execution means determines that the communication apparatus operates as either the providing apparatus or the reception apparatus.

5. The communication apparatus according to claim 1, further comprising notification means for issuing an error notification in a case where communication for sharing the communication parameter with another communication apparatus is not started within a predetermined time after the determination means determines that the communication apparatus operates as either the providing apparatus or the reception apparatus.

6. The communication apparatus according to claim 1, further comprising first inquiry means for inquiring of a user whether the execution means is to execute the predetermined processing again in a case where communication for sharing the communication parameter with another communication apparatus is not started within a predetermined time after the determination means determines that the communication apparatus operates as either the providing apparatus or the reception apparatus,
wherein the execution means is adapted to execute the predetermined processing again in a case where the user instructs the communication apparatus to execute the predetermined processing again.

7. The communication apparatus according to claim 1, further comprising display means for, in a case where the communication apparatus shares a communication parameter with another communication apparatus according to a role determined based on the predetermined processing executed again by the execution means, displaying information regarding the another communication apparatus.

8. The communication apparatus according to claim 1, further comprising:
second inquiry means for, in a case where the communication apparatus shares a communication parameter with another communication apparatus according to a role determined based on the predetermined processing executed again by the execution means, inquiring of a user about whether to connect to the another communication apparatus; and
control means adapted to perform processing for connecting to the another communication apparatus in a case where the user instructs the communication apparatus to connect to the another communication apparatus.

9. The communication apparatus according to claim 8, wherein the processing for connecting to the another communication apparatus comprises encryption key exchange processing.

10. A method for controlling a communication apparatus having a providing function for providing a communication parameter to another communication apparatus to share the communication parameter with the another communication apparatus, and a reception function for receiving a communication parameter provided by another communication apparatus to share the communication parameter with the another communication apparatus, the method comprising:
determining a function to perform based on predetermined processing for determining whether the communication apparatus performs the providing function or the reception function by communication with another communication apparatus; and
executing the predetermined processing again in a case where communication for sharing the communication parameter with another communication apparatus is not started within a predetermined time after it is determined that the communication apparatus performs either the providing function or the reception function.

11. A program for causing a computer to perform a method according to claim 10.
